# EUROPÄISCHE PATENTSCHRIFT

(11) **EP 3 393 883 B1**
(45) Veröffentlichungstag und Bekanntmachung des Hinweises auf die Patenterteilung: **30.10.2019**
(21) Anmeldenummer: 17705822.9
(22) Anmeldetag: 10.02.2017
(51) Int. Cl.: B61D 17/02

(54) **SCHIENENFAHRZEUG, INSBESONDERE LOKOMOTIVE**
RAIL VEHICLE, IN PARTICULAR LOCOMOTIVE
VÉHICULE FERROVIAIRE, EN PARTICULIER LOCOMOTIVE

(30) Priorität: 31.03.2016 DE 102016205305
(43) Veröffentlichungstag der Anmeldung: 31.10.2018
(73) Patentinhaber: Siemens Mobility GmbH, 81739 München (DE)
(72) Erfinder: KROISS, Manuel, 85258 Ebersbach (DE); LANGENBACHER, Thomas, 86415 Mering (DE); PEER, Hannes, 80809 München (DE); PRÖLL, Günther, 86199 Augsburg (DE)
(86) Internationale Anmeldenummer: PCT/EP2017/052950
(87) Internationale Veröffentlichungsnummer: WO 2017/167488

(56) Entgegenhaltungen:
- EP-A1- 2 851 257
- EP-A2- 0 376 351
- WO-A1-2011/154527
- DE-A1-102012 213 019

## Beschreibung

Die Erfindung betrifft eine Lokomotive.

Aus der Patentschrift EP 2 238 011 B1 ist ein Kopfbauteil für ein Schienenfahrzeug bekannt, welches eine Tragstruktur aus zwei Seitenwänden, einer Dachabdeckung und einer Bodenwandung umfasst. Die Tragstruktur weist Ausnehmungen für Scheinwerfer, für Frontscheiben und Stauräume zur Unterbringung von raumlufttechnischen Anlagen auf. Die Tragstruktur umfasst ferner einen unteren Rammträger sowie unterhalb der Frontscheibenausnehmungen einen mittleren Querträger zur Anbringung eines Führertisches. Zur Montage der Tragstruktur an einen Wagenkasten des Schienenfahrzeugs ist eine lösbare Flanschverbindung mit Schließringbolzen vorgesehen.

Die Frontnase des Kopfbauteils dieses bekannten Schienenfahrzeugs umfasst eine vordefinierte, feste Form, die durch die frontseitigen, gebogenen Enden der Seitenwände, durch ein den mittleren Querträger abdeckendes Blech sowie durch eine nicht dargestellte Frontklappe gebildet ist. Eine Änderung der Frontnasenform erfordert eine aufwändige Neukonstruktion des kompletten Kopfbauteiles und dessen Anbindung an den Wagenkasten.

Aus EP 2 851 257 A1 ist ein Schienenfahrzeug mit einem Wagenkasten bekannt, der in eine Grundsektion und in eine Kopfsektion unterteilt ist. Im Bereich der Grundsektion ist eine bevorzugt als bewegliche Kante ausgestaltete "flow separation section" angeordnet.

Aus EP 0 376 351 A2 ist eine Einrichtung zur Verminderung des Luftwiderstands und zur Dämpfung der Aufprallkräfte eines Fahrzeugs bekannt. Dabei wird am Vorder- und/oder Hinterteil des Fahrzeugs eine verstellbare Stirnplatte angeordnet, die mit schürzen- bzw. keilförmigen Seitenwänden verbunden ist.

Aus DE 10 2012 213 019 A1 ist ein Zugkopfteil mit einer Kabine bekannt. Die Kabine umfasst wenigstens ein Dachmodul, welches derart mit dem Kabinengrundkörper verbunden ist, dass es zerstörungsfrei von diesem trennbar ist.

Aus WO 2011/154527 A1 ist eine Vorrichtung zum Verschwenken einer oder mehrerer Bugklappen eines spurgeführten Fahrzeuges sowie ein Bugklappenmodul bekannt.

Der Erfindung liegt die Aufgabe zugrunde, ein Schienenfahrzeug der eingangs genannten Art bereitzustellen, welches mehr Flexibilität in der Formgestaltung des Kopfendes seines Wagenkastens erlaubt.

Die Aufgabe wird erfindungsgemäß gelöst durch eine Lokomotive mit den Merkmalen des Anspruchs 1.

Der Wagenkasten weist im Bereich seines Kopfendes eine Schnittstelle auf, die zum Befestigen und Anschließen unterschiedlich geformter, einen Variantensatz bildender Frontnasen ausgebildet und vorgesehen ist.

Die Schnittstelle ist für alle Frontnasen des Variantensatzes einheitlich, um eine flexible Gestaltung des Kopfendes bei Verwendung des bis zu seiner Schnittstelle identischen Wagenkastens zu erlauben.

Die Schnittstelle ist durch sich quer zu einer Fahrzeuglängsachse erstreckende Frontplatten gebildet, welche mit einem Querträger des Wagenkastens verbunden sind.

Eine aus dem Variantensatz ausgewählte Frontnase ist an der Schnittstelle mittels einer Schweißverbindung befestigt. Der der Variantensatz umfasst eine erste Frontnase, deren einzelne Anschweißteile eine hängende Schürzenform bilden, die etwa parallel zur Ebene der Schnittstelle verläuft und lediglich deren Frontplatten abdecken.
Der Variantensatz umfasst eine zweite Frontnase, die eine aerodynamische Spitzenform bildet, welche den Verlauf einer Frontwand und von Seitenwänden des Wagenkastens ohne Kantenbildung fortsetzt.

Der Kern der Erfindung liegt einerseits in der Bereitstellung eines Variantensatzes an Frontnasen, die sich wenigstens in ihrer Formgestaltung voneinander unterscheiden, und andererseits in der Bereitstellung einer für alle Frontnasen des Variantensatzes einheitlichen Schnittstelle am Wagenkasten zur Befestigung und zum Anschluss einer für ihren Einsatzzweck ausgewählten Frontnase. Dies erlaubt eine flexible Gestaltung des Kopfendes bei Verwendung des bis zu seiner Schnittstelle identischen Wagenkastens. Durch diese Gestaltungsfreiheit lässt sich das Schienenfahrzeug leicht an unterschiedliche Anforderungen hinsichtlich seiner Aerodynamik anpassen. Während bei einem Einsatz des Schienenfahrzeugs im Personenverkehr bei hohen Fahrgeschwindigkeiten eine stromlinienförmige Frontnase zu geringeren Traktionsenergieverlusten und Fahrgeräuschen führt, kann die Form der Frontnase bei einem Einsatz im Güterverkehr auch flacher gestaltet werden. Unterschiedlich geformte Frontnasen bieten aber auch einfach mehr Gestaltungsmöglichkeiten für das Fahrzeugdesign, um unterschiedlichen Kundenanforderungen nachkommen zu können, ohne das Schienenfahrzeug komplett neukonstruieren zu müssen. Durch Anschweißen der Frontnase an die Schnittstelle wird eine feste mechanische Verbindung mit dem Wagenkasten erreicht, welche leichteren Einschlägen von Gegenständen, etwa vom Gleis aufgewirbelten Schotterstücken, standhalten kann.

Erfindungsgemäß ist die Schnittstelle durch sich quer zu einer Fahrzeuglängsachse erstreckende Frontplatten gebildet, welche mit einem Querträger des Wagenkastens verbunden sind. Die vertikalen Frontplatten bilden eine den Führerraum des Schienenfahrzeugs nach vorn abschließende Trennwand, die mit einem unteren Querträger, der zum Untergestell des Wagenkastens gehört oder mit diesem verbunden ist, und gegebenenfalls mit einem mittleren Querträger, der auf Höhe der Unterkante der Frontscheiben verläuft und eine Tragstruktur für den Führertisch bildet, verbunden ist. Die Schnittstelle kann einen am unteren Querträger festgesetzten Kupplungskäfig mit Rippen als Aufkletterschutz und einem Räumträger für einen Bahnräumer. Der Kupplungskäfig weist eine Durchtrittsöffnung für eine Mittelpufferkupplung auf. Ferner kann die Schnittstelle mechanische Befestigungsmittel, die zum Anschweißen einer Frontnase ausgebildet sind, sowie Anschlussmittel, die zum Anschließen von pneumatischen und/oder elektrischen Leitungen ausgebildet sind, aufweisen.

Erfindungsgemäß bildet eine erste Frontnase eine hängende Schürzenform, die lediglich die Frontplatten abdeckt. Diese erste Variante der Frontnase ist durch einen kleinflächigen Anschweißteilesatz gebildet, der Scheinwerferausnehmungen für Frontscheinwerfer und eine Klappenausnehmung für eine Frontklappe aufweisen kann. Die flache Schürzenform bildet deutliche Kanten an den Übergängen der Frontnase zu den Seitenwänden und zur Frontwand des Wagenkastens aus und ist damit weniger stromlinienförmig aber einfach und kostengünstig herzustellen.

Erfindungsgemäß bildet eine zweite Frontnase eine aerodynamische Spitzenform, welche den Verlauf einer Frontwand und von Seitenwänden des Wagenkastens ohne Kantenbildung fortsetzt. Diese zweite Variante der Frontnase ist durch einen großflächigeren Anschweißteilesatz gebildet, der Scheinwerferausnehmungen für Frontscheinwerfer und eine Frontausnehmung für eine Frontabdeckung aufweisen kann. An ihrer Spitze weist diese Frontnase eine Kupplungsöffnung auf, die durch eine zweiteilige Bugklappe verschließbar ist. Die Anschweißteile sind über ein versteifendes Traggerippe verbunden.

In einer bevorzugten Ausführungsform des erfindungsgemäßen Schienenfahrzeugs weisen die Frontnasen aus Stahl gefertigte Anschweißteile auf. Stahlanschweißteile bieten einen gewissen Schutz vor Beschädigungen bei kleineren Einschlägen durch auf dem Gleis liegenden Gegenständen. Darüber hinaus erhöhen sie die Reparaturfreundlichkeit, da beschädigte Stahlanschweißteile sich einfach ausbeulen oder austrennen und durch neu angeschweißte Anschweißteile ersetzen lassen.

Weitere Eigenschaften und Vorteile der Erfindung ergeben sich aus nachfolgender Beschreibung eines konkreten Ausführungsbeispiels anhand der Zeichnungen, in deren
- FIG 1: ein Kopfende eines Wagenkastens eines erfindungsgemäßen Schienenfahrzeugs ohne Frontnase,
- FIG 2: eine erste Variante einer Frontnase,
- FIG 3: eine zweite Variante einer Frontnase,
- FIG 4: das Kopfende aus FIG 1 mit Frontnase gemäß FIG 2 und
- FIG 5: das Kopfende aus FIG 1 mit Frontnase gemäß FIG 3
jeweils in perspektivischer Ansicht schematisch veranschaulicht sind.

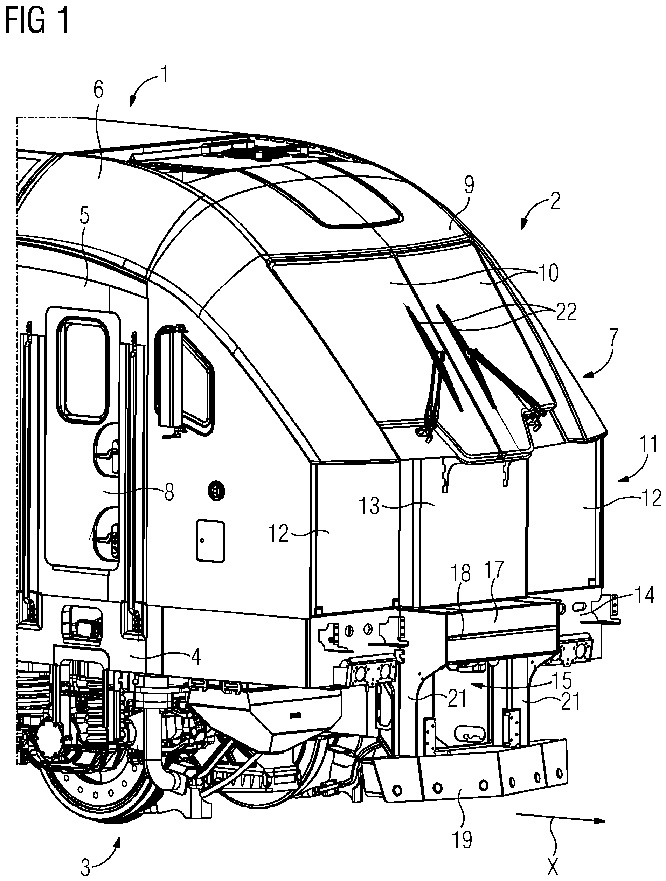

Gemäß FIG 1 umfasst ein als Lokomotive 1 ausgebildetes Schienenfahrzeug einen Wagenkasten 2, der sich auf längs eines Schienenweges verfahrbaren Drehgestellen 3 federnd abstützt. Der Wagenkasten 2 weist ein Untergestell 4 auf, welches Seitenwände 5 und ein diese verbindendes Fahrzeugdach 6 trägt. Im Wagenkasten 2 befindet sich ein Antriebskomponenten beherbergender Maschinenraum sowie an wenigstens einem Kopfende 7 des Wagenkastens 2 ein Führerraum, der über Führerraumtüren 8 in den Seitenwänden 5 zugänglich ist. Das Fahrzeugdach 6 geht im Bereich des Kopfendes 7 in eine geneigte Frontwand 9 über, welche Ausnehmungen für Frontscheiben 10 aufweist.

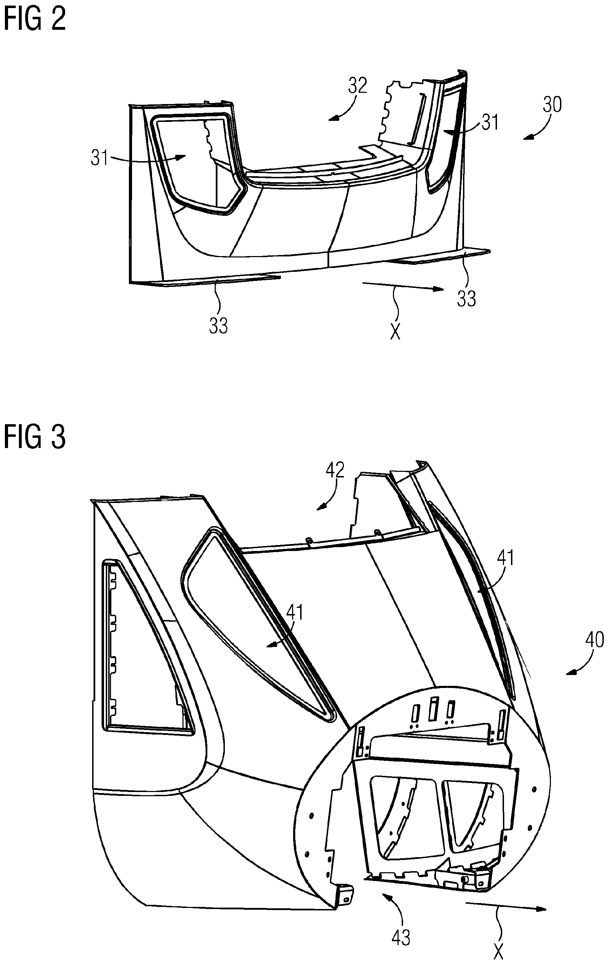

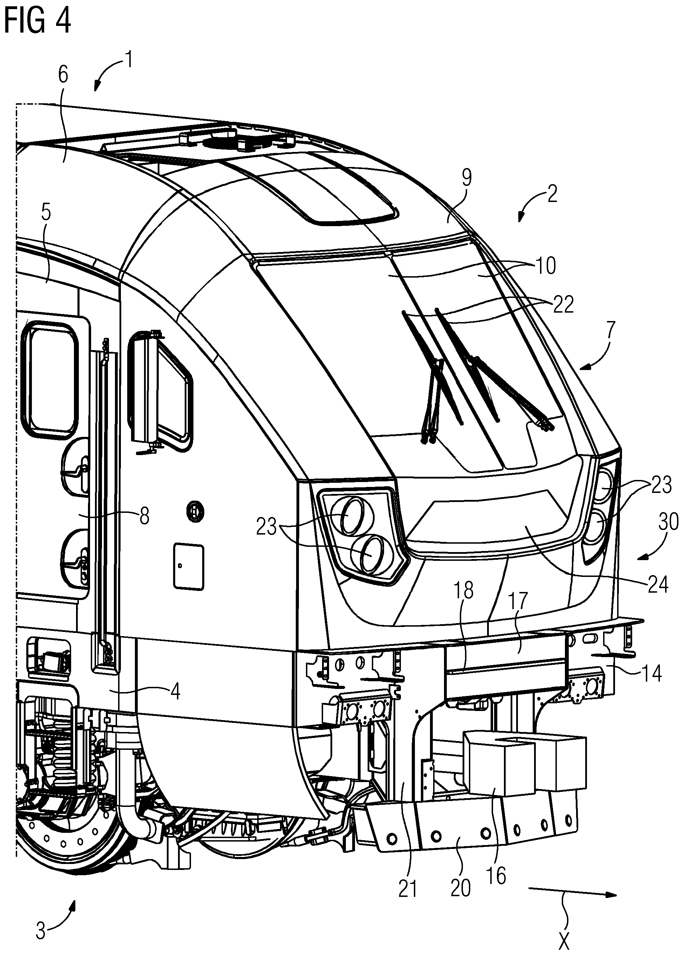

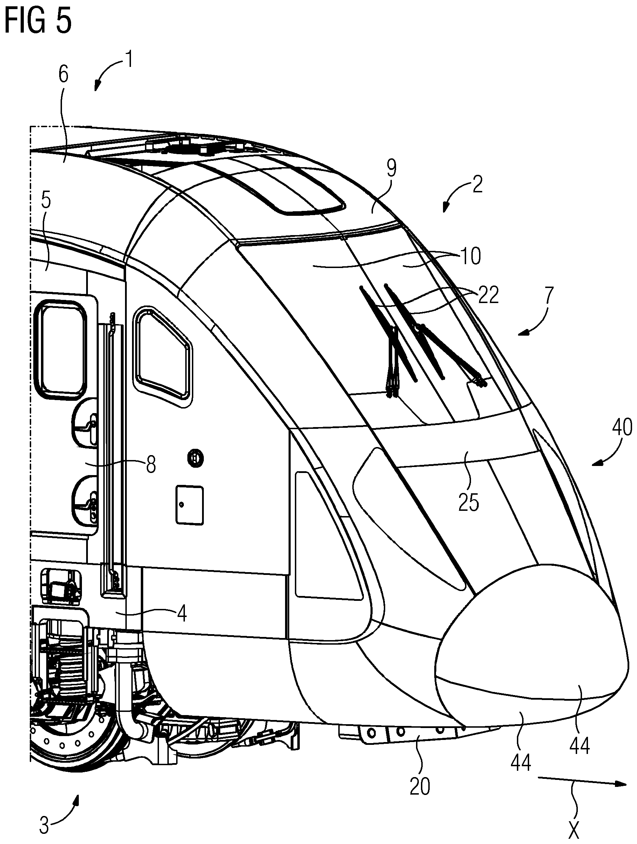

Erfindungsgemäß weist der Wagenkasten 2 im Bereich seines Kopfendes 7 eine Schnittstelle 11 auf, die zum Befestigen und Anschließen unterschiedlich geformter Frontnasen 30 oder 40 gemäß FIG 2 oder FIG 3 ausgebildet und vorgesehen ist. Die Frontnasen 30 und 40 bilden einen Variantensatz, aus dem eine Frontnase 30 oder 40 - beispielsweise vom Betreiber gemäß seinem beabsichtigten Einsatz der Lokomotive 1 - ausgewählt und an der Schnittstelle 11 mittels einer Schweißverbindung befestigt wird. Auf diese Weise können zwei Varianten von Lokomotiven 1 bereitgestellt werden, bei welchen bis auf die Frontnase 20 oder 30 derselbe Wagenkasten 2 genutzt werden kann. Die Schweißverbindung gewährleistet eine hohe mechanische Stabilität der Frontnasenbefestigung bei Stoßbelastungen im Vergleich zu Schraub- oder Klebeverbindungen. Die Schnittstelle 11 ist durch sich quer zu einer Fahrzeuglängsachse x erstreckende Frontplatten 12 und 13 gebildet, nämlich zwei seitliche Frontplatten 12 und eine zwischen diesen aber in Fahrzeuglängsrichtung x nach vorn versetzt angeordnete, mittlere Frontplatte 13. Die Frontplatten 12 und 13 erstrecken sich vertikal von einem unteren Querträger 14, der Teil des Untergestells 4 des Wagenkastens 2 oder mit diesem verbunden ist, hoch bis zu einem nicht dargestellten, mittleren Querträger, der etwa auf Höhe der Unterkante der Frontscheiben 10 verläuft und eine Tragstruktur für einen Führertisch des Führerraums bildet. Die Schnittstelle 11 umfasst einen mittig an der Vorderseite des unteren Querträgers 14 festgesetzten Kupplungskäfig mit einer Durchtrittsöffnung 15 für eine in FIG 4 dargestellte Mittelpufferkupplung 16. Die Durchtrittsöffnung 15 wird nach oben durch einen vom unteren Querträger 14 nach vorn springenden Kasten 17 mit als Aufkletterschutz wirkenden Rippen 18, nach unten durch eine Räumeraufnahme 19 zur Befestigung eines in FIG 4 und FIG 5 dargestellten Bahnräumers 20 und seitlich durch zwei den Kasten 17 und die Räumeraufnahme 19 verbindende Seitenträger 21 begrenzt, die in ihrer Gesamtheit den Kupplungskäfig bilden. Der gesamte Führerraum, einschließlich Führertisch, Innenverkleidung, Frontscheiben 10 mit Scheibenwischern 22, Klimagerät und dergleichen, ist so gestaltet, dass sich dieser komplett hinter der für unterschiedliche Frontnasen 30 oder 40 gemeinsamen Schnittstelle 11 befindet. Die Schnittstelle 11 weist auch pneumatische Anschlüsse für die Druckluftverrohrung sowie elektrische Anschlüsse etwa für Frontscheinwerfer 23 auf.

Der dargestellte Variantensatz umfasst eine erste Frontnase 30 gemäß FIG 2 und FIG 4 und eine zweite Frontnase 40 gemäß FIG 3 und FIG 5, die unterschiedlich geformt sind, aber beide an die erfindungsgemäße Schnittstelle 11 anschweißbar und anschließbar sind. Der Variantensatz kann ohne den erfindungsgemäßen Grundgedanken zu verlassen auch mehr als zwei unterschiedlich geformte Frontnasen umfassen.

FIG 2 zeigt die erste Frontnase 30, deren einzelne Anschweißteile eine hängende Schürzenform bilden, die etwa parallel zur Ebene der Schnittstelle 11 verläuft und lediglich deren Frontplatten 12 und 13 abdecken. Gemäß FIG 4 bildet die Schürzenform deutliche Kanten an den Übergängen der Frontnase 30 zu den Seitenwänden 5 und zur Frontwand 9 aus. Seitlich weist die Frontnase 30 Scheinwerferausnehmungen 31 auf, dazwischen eine Klappenausnehmung 32, die durch eine in FIG 4 dargestellte Frontklappe 24 verschließbar ist. An ihrer Unterkante weist die Frontnase 30 zwei sich horizontal erstreckende Stege 33 auf, die im angeschweißten Zustand der Frontnase 30 ein durchgehendes Plateau mit der Oberseite des Kastens 17 des Kupplungskäfigs bilden.

FIG 3 zeigt die zweite Frontnase 40, deren einzelne Anschweißteile eine aerodynamische, runde Spitzenform bilden, die gemäß FIG 5 den geneigten Verlauf der Frontwand 9 und den der Seitenwände 5 ohne Kante fortsetzt. Seitlich weist die Frontnase 40 Scheinwerferausnehmungen 41 auf, dazwischen eine Frontausnehmung 42, die durch eine in FIG 5 dargestellte Frontabdeckung 25 verschließbar ist. Die Frontnase 40 weist an ihrer Spitze eine Kupplungsöffnung 43 auf, die durch eine zweiteilige Bugklappe 44 verschließbar ist. Die Anschweißteile der Frontnase 40 sind über ein versteifendes Traggerippe 45 verbunden.

Die aus Stahl gefertigten Anschweißteile der Frontnasen 30 oder 40 bieten einerseits einen gewissen Schutz vor Beschädigungen bei kleineren Einschlägen durch auf dem Gleis liegenden Gegenständen. Andererseits erlaubt eine geschweißte Frontnase 30 oder 40 eine einfache Reparaturmöglichkeit durch Ausbeulen beschädigter Anschweißteile oder durch deren Austrennen und Neuanschweißen von Ersatzanschweißteilen.

## Patentansprüche

1. Lokomotive (1), umfassend einen Wagenkasten (2) mit einem eine Frontnase (20, 30) aufweisenden Kopfende (7), wobei,
- der Wagenkasten (2) im Bereich seines Kopfendes (7) eine Schnittstelle (11) aufweist, die zum Befestigen und Anschließen unterschiedlich geformter, einen Variantensatz bildender Frontnasen (20, 30) ausgebildet und vorgesehen ist,
- die Schnittstelle für alle Frontnasen des Variantensatzes einheitlich ist, um eine flexible Gestaltung des Kopfendes bei Verwendung des bis zu seiner Schnittstelle identischen Wagenkastens zu erlauben,
- die Schnittstelle (11) durch sich quer zu einer Fahrzeuglängsachse (x) erstreckende Frontplatten (12, 13) gebildet ist, welche mit einem Querträger (14) des Wagenkastens (2) verbunden sind,
- eine aus dem Variantensatz ausgewählte Frontnase (20, 30) an der Schnittstelle (11) mittels einer Schweißverbindung befestigt ist,
- der Variantensatz eine erste Frontnase (30) umfasst, die eine hängende Schürzenform bildet, die lediglich die Frontplatten (12, 13) abdeckt, und wobei
- der Variantensatz eine zweite Frontnase (40) umfasst, die eine aerodynamische Spitzenform bildet, welche den Verlauf einer Frontwand (9) und von Seitenwänden (5) des Wagenkastens (2) ohne Kantenbildung fortsetzt.

2. Lokomotive nach Anspruch 1, **dadurch gekennzeichnet, dass** die Frontnasen (30, 40) aus Stahl gefertigte Anschweißteile aufweisen.

## Claims

1. Locomotive (1), comprising a carriage body (2) with a head end (7) having a front nose (20, 30), wherein
- the carriage body (2) has an interface (11) in the region of its head end (7), which is designed and provided for fixing and connecting differently shaped front noses (20, 30) forming a variant set,
- the interface is uniform for all front noses of the variant set, in order to permit flexible configuration of the head end when using a carriage body that is identical apart from its interface,
- the interface (11) is formed by front plates (12, 13) which extend transversely with respect to a vehicle longitudinal axis (x) and which are connected to a crossmember (14) of the carriage body (2),
- a front nose (20, 30) selected from the variant set is fixed to the interface (11) by means of a welded connection,
- the variant set comprises a first front nose (30) which forms a hanging skirt shape which covers only the front plates (12, 13), and wherein
- the variant set comprises a second front nose (40) which forms an aerodynamic pointed shape which continues the course of a front wall (9) and of side walls (5) of the carriage body (2) without forming edges.

2. Locomotive according to Claim 1, **characterized in that** the front noses (30, 40) have weld-on parts manufactured from steel.

## Revendications

1. Locomotive (1), comprenant une carrosserie (2) comportant une extrémité de tête (7) pourvue d'un bec frontal (20, 30),
- la carrosserie (2) présentant dans la zone de son extrémité de tête (7) une interface (11) qui est conçue et réalisée pour la fixation et le raccordement de becs frontaux (20, 30) de différentes formes qui constituent un ensemble de variantes,
- l'interface étant uniforme pour tous les becs frontaux de l'ensemble de variantes, pour permettre une configuration flexible de l'extrémité de tête en utilisant la carrosserie identique jusqu'à son interface,
- l'interface (11) étant formée par des plaques frontales (12, 13) s'étendant de manière transversale à un axe longitudinal de véhicule (x) qui sont reliées à une traverse (14) de la carrosserie (2),
- un bec frontal (20, 30) choisi dans l'ensemble de variantes étant fixé sur l'interface (11) au moyen d'une soudure,
- l'ensemble de variantes comprenant un premier bec frontal (30) qui prend la forme d'une jupe suspendue qui couvre simplement les plaques frontales (12, 13), et
- l'ensemble de variantes comprenant un second bec frontal (40) qui prend la forme d'une pointe aérodynamique qui vient en continuité du profil d'une paroi frontale (9) et de parois latérales (5) de la carrosserie (2) sans former d'arêtes.

2. Locomotive selon la revendication 1, **caractérisée en ce que** les becs frontaux (30, 40) présentent des parties à souder réalisées en acier.
